# EUROPEAN PATENT APPLICATION

(11) **EP 4 760 804 A1**
(43) Date of publication of application: **17.06.2026**
(21) Application number: 25745289.6
(22) Date of filing: 22.01.2025
(51) Int. Cl.: H01M 4/136, H01M 4/58, H01M 4/62, H01M 4/1397, H01M 4/04, H01M 10/0562, H01M 10/0585, H01M 10/052

(54) **COMPOSITE POSITIVE ELECTRODE FOR ALL-SOLID-STATE BATTERY, MANUFACTURING METHOD THEREFOR, AND ALL-SOLID-STATE BATTERY THEREOF**

(30) Priority: 22.01.2024 US 202463623546 P; 20.02.2024 US 202463555694 P; 19.07.2024 US 202418778467
(71) Applicant: LG Energy Solution, Ltd., Seoul 07335 (KR); The Regents of the University of California, Oakland, CA 94607-5200 (US)
(72) Inventor: LEE, Jeongbeom, Daejeon 34122 (KR); SONG, Min Sang, Daejeon 34122 (KR); CRONK, Ashley, Oakland, California 94607-5200 (US); JANG, Jihyun, Oakland, California 94607-5200 (US); MENG, Ying Shirley, San Diego, California 92109 (US)
(74) Representative: Goddar, Heinz J.
(86) International application number: PCT/KR2025/099126
(87) International publication number: WO 2025/159624

(57) **Abstract**

A composite positive electrode is disclosed, as well as a method for making the composite positive electrode and an all-solid-state battery including the composite positive electrode. The composite positive electrode includes: a plurality of sulfur particles having an average particle size from 5 µm to 10 µm; a plurality of sulfur-containing solid electrolyte particles of formula Li₆PS₅X, wherein X = Cl, Br, or I; and a conductive material including a plurality of acetylene black carbon particles. The acetylene black carbon particles have a mean particle size from 10 nm to 100 nm, a BET specific surface area from 50 m²g⁻¹ to 150 m²g⁻¹, and a para-crystalline structure. The sulfur particles, sulfur-containing solid electrolyte particles, and conductive material are ball milled to form a milled mixture; and pressured to form the composite positive electrode.

## Description

### CROSS-REFERENCE TO RELATED APPLICATIONS

The present application claims priority to U.S. Provisional Application No. 63/623,546, filed January 22, 2024, U.S. Provisional Application No. 63/555,694, filed February 20, 2024, and U.S. Non Provisional Application No. 18/778,467, filed July 19, 2024.

### FIELD OF TECHNOLOGY

The present disclosure relates to a composite positive electrode for an all-solid-state battery, which comprises sulfur particles having an average particle size from 5 µm to 10 µm; sulfur-containing solid electrolyte particles of formula Li₆PS₅X (where X = Cl, Br, or I); and acetylene black carbon particles. An all-solid-state battery comprising the composite positive electrode, and methods for making the composite positive electrode and battery are also described.

### BACKGROUND

There continues to be an increase in electrified transportation, exemplified by the widespread adoption of electric vehicles (EVs) and the emergence of urban air mobility (UAM) vehicles. Simultaneously, there is a growing demand for stationary energy storage systems, notably in the residential and industrial sectors, powered by solar and wind generators. This shift is driven in part by the pressing need to mitigate the adverse environmental and climate impacts associated with traditional internal combustion engines and other non-renewable means of power generation. Thus, the development of battery technologies with high energy density, while also ensuring enhanced safety, has become an imperative.

Conventional liquid lithium-ion batteries were critical to the advancement of electrified transportation and energy storage systems, and have had a significant and positive impact on green energy and climate change mitigation efforts. While such conventional liquid lithium-ion batteries are superior to many other energy sources, liquid lithium-ion batteries also have certain limitations. For example, various safety mechanisms are critical for lithium-ion batteries to restrict voltage and internal pressures, but these safety features typically result in increased weight and performance limitations in certain instances. Moreover, lithium-ion batteries are susceptible to aging, leading to capacity loss and eventually failure after a number of years of use.

In an all-solid-state battery (ASSB), a solid electrolyte is used instead of a liquid electrolyte, making the entire battery solid. The solid electrolyte is intrinsically non-flammable and can accommodate a wider temperature range, allowing it to function as electrochemical energy storage without the need for additional safety devices. Solid state batteries offer higher energy density and are safer than batteries with a liquid electrolyte system, such as conventional lithium-ion batteries. In a conventional solid state battery, a solid electrolyte replaces a liquid electrolyte system, and thus reduces the risk of ignition or explosion, thereby increasing safety.

For example, lithium-sulfur batteries using lithium and an alkali metal as a negative electrode active material and sulfur as a positive electrode active material have a theoretical energy density of 2,800 Wh/kg (1,675 mAh g⁻¹), which is significantly higher than those of other battery systems, and have received attention as portable electronic devices due to an advantage in that sulfur is inexpensive due to the abundance in resources, and is an environmentally-friendly material. Lithium metal is advantageous because it is lightweight and therefore can potentially enable high energy density, where various positive electrode active materials may be used for lithium batteries, including sulfur-containing positive electrode active materials having sulfur-sulfur bonds, which have high energy capacities due to a 16- electron conversion reaction to form Li₂S in its reduced state. However, when sulfur is used as a positive electrode active material for a lithium-sulfur battery, it is a non-conductor, making it difficult for electrons and lithium ions produced by an electrochemical reaction to move. Also, in the case of sulfur positive electrode, due to the large volume change during charging and discharging, there is an issue with reduced performance and lifetime.

Therefore, there is a high need for a technology to increase energy density, improve cycle characteristics and lifetime in an ASSB technology.

### SUMMARY

The present disclosure relates to a composite positive electrode, as well as a method for making the composite positive electrode and an all-solid state battery comprising the composite positive electrode.

The composite positive electrode comprises: (i) a plurality of sulfur particles, the sulfur particles having an average particle size from 5 µm to 10 µm; (ii) a plurality of sulfur-containing solid electrolyte particles of formula Li₆PS₅X, wherein X = Cl, Br, or I; and (iii) a plurality of acetylene black carbon particles, the plurality of acetylene black carbon particles having: a mean particle size from 10 nm to 100 nm, a Brunauer-Emmett-Teller (BET) specific surface area from 50 m²g⁻¹ to 150 m²g⁻¹, and a para-crystalline structure. The sulfur particles, sulfur-containing solid electrolyte particles, and conductive material are ball milled to form a milled mixture; and pressurized to form the composite positive electrode.

Some aspects relate to a method for making a composite positive electrode, comprising: providing a plurality of sulfur particles, wherein the sulfur particles have an average particle size from 5 µm to 10 µm; providing a plurality of sulfur-containing solid electrolyte particles of formula Li₆PS₅X, wherein X = Cl, Br, or I; and providing a plurality of acetylene black carbon particles, wherein the plurality of acetylene black carbon particles have a mean particle size from 10 nm to 100 nm, BET specific surface area from 50 m²g⁻¹ to 150 m²g⁻¹, and a para-crystalline structure; milling the sulfur particles, sulfur-containing solid electrolyte particles, and conductive material to form a milled mixture, and pressurizing the milled mixture to form the composite positive electrode. Some aspects relate to a composite positive electrode produced according to this method.

In an aspect, the milling is carried out at 200-500 rpm, preferably at 300-500 rpm, more preferably at 400-500 rpm.

In an aspect, the milling is carried out for 30 minutes to 2 hours, preferably 30 minutes, preferably 1 hour.

In some aspects, the milled mixture is pressurized at a pressure from 100 MPa to 500 MPa, for instance from 150 MPa to 375 MPa. In some aspects, the pressurizing is carried out for 1 minute to 60 minutes.

Some aspects relate to an all solid state battery comprising: an anode; the composite positive electrode as described herein; and a solid electrolyte. Preferably, the composite positive electrode comprises sulfur channels in contact with the solid electrolyte. Such sulfur channels may have a channel diameter ranging from 10 - 40 microns.

Some aspects relate to the composite positive electrode, wherein the composite positive electrode includes amorphous sulfur.

In some aspects, the sulfur particles, sulfur-containing solid electrolyte particles, and conductive material used to make the milled mixture are provided in a weight ratio of 20-50 : 40-60 : 10-30, preferably 25-35 : 45-55 : 15-25, or more preferably in a weight ratio of 30 : 50 : 20.

In some aspects, the plurality of sulfur-containing solid electrolyte particles are of formula Li₆PS₅Cl.

In other aspects, the plurality of acetylene black carbon particles have a mean particle size of 40 nm.

In some aspects, the plurality of acetylene black carbon particles have a BET specific surface area of 90 m²g⁻¹.

In some aspects, the plurality of acetylene black carbon particles are non-porous.

In some aspects, the plurality of acetylene black carbon have a para-crystalline structure.

Each aspect may further have one or more additional elements in any combination.

### BRIEF DESCRIPTION OF THE DRAWINGS

The accompanying drawings illustrate aspects of the present disclosure, and together with the detailed disclosure, serve to provide a further understanding of the technical aspects of the present disclosure, and the present disclosure should not be construed as being limiting to the drawings. In the drawings, for clarity of description, the shape, size, scale or proportion of the elements may be exaggerated for emphasis.
FIG. 1A and FIG. 1B show the PXRD diffractogram and Raman spectra for the milled positive electrode material of Synthetic Example 1.
In FIG. 2A, a SEM image for the ball milled sulfur is shown. In FIG. 2B, a SEM image for the milled LPSCl is shown. In FIG. 2C, a SEM image for the positive electrode mixture of LPSCl, sulfur and acetylene black (AB) is shown.
FIG. 3A shows the test results for Capacity (mAh g⁻¹) as a function of Voltage vs. Li⁺/Li (V) when operated at 1.6 mAh g⁻¹. FIG. 3B shows the results for Specific Capacity (mAh g⁻¹) as a function of cycle number when operated at 1.6 mAh g⁻¹.
FIG. 4A shows the apparatus used for testing, which is a fixed gap holder at 5 mAh cm⁻², Li₁In₁ usable capacity of 110 mAh g-1 and NP ratio of 2. FIG. 4B shows the results for S Capacity (mAh g⁻¹) as a function of Voltage vs. Li⁺/Li (V). FIG. 4C shows the results for S Capacity (mAh g⁻¹) as a function of cycle number.
FIG. 5A shows the experimental setup, which was used (according to S.-Y. Ham et al., Energy Storage Materials 55:455-462 (2023)) at a constant pressure of 10 MPa, 1.6-5 mAh cm⁻². FIG. 5B shows the results for Experimental Example 1 when tested at 1.6 mAh cm⁻² for S Capacity (mAh g⁻¹) as a function of Voltage vs. Li⁺/Li (V). FIG. 5C shows the results for Experimental Example 1 when tested at 5 mAh cm⁻² for S Capacity (mAh g⁻¹) as a function of Voltage vs. Li⁺/Li (V).
FIG. 6A shows the results for S Capacity (mAh g⁻¹) as a function of cycle number when measured at 1.6 mAh cm⁻². FIG. 6B shows the results for S Capacity (mAh g⁻¹) as a function of cycle number when measured at 5 mAh cm⁻².
FIGs. 7A-F shows the testing results for elemental sulfur all-solid-state cell performance using chloride and sulfide-based electrolytes. Voltage profiles and cycling performance is shown for LZC *(see* FIG. 7A and FIG. 7B), LYC *(see* FIG. 7C and FIG. 7D), and LPSCl *(see* FIG. 7E and FIG. 7F), when used as the ion conductor within the positive electrodecomposite. FIG. 7G shows a comparison of the results of the milled positive electrode shown in FIG. 7E.
FIG. 8A shows the SEM images and EDS mapping of the µm Sulfur composite electrode surface in a pristine state. FIG. 8B shows the SEM images and EDS mapping of the µm Sulfur composite electrode surface in a cycled state.
FIG. 9A is an XRD diffractogram showing amorphization of composite for milled S/LPSCl composite with various milling times. With increase milling times, amorphization of the sulfur in the S/LPSCl composite is apparent. FIG. 9B is an XRD diffractogram showing amorphization of composite for milled S/LPSCl/C composite with various milling times.
FIG. 10A shows electrochemical performance at 5mAh cm⁻² areal capacity demonstrating size effect of LPSCl solid electrolyte for a first cycle voltage profile comparing micron and un-milled LPSCl. FIG. 10B shows SEM images of micron and un-milled LPSCl solid electrolyte.

### DETAILED DESCRIPTION

Hereinafter, the present disclosure will be described in detail. It should be understood that the terms or words used in the specification and the appended claims should not be construed as limited to general and dictionary meanings, but rather interpreted based on the meanings and concepts corresponding to the technical aspects of the present disclosure on the basis of the principle that the inventor is allowed to define terms appropriately for the best explanation. Therefore, the aspects of the disclosure described herein and the elements shown in the drawings are just aspects of the present disclosure, but not intended to fully describe the technical aspects of the present disclosure, so it should be understood that other equivalents and modifications could have been made thereto at the time the application was filed. Unless defined otherwise, all the technical and scientific terms used herein have the same meanings as commonly known by a person skilled in the art. In the case that there is a plurality of definitions for the terms herein, the definitions provided herein will prevail.

Unless specified otherwise, all the percentages, portions and ratios in the present disclosure are on weight basis.

Unless indicated to the contrary, the numerical parameters set forth in the following specification and attached claims are approximations that may vary depending upon the desired properties sought to be obtained according to aspects of the disclosure. Whenever a numerical range with a lower limit and an upper limit is disclosed, any number and any included range falling within the range is specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values.

While compositions and methods are described herein in terms of "comprising" various components or steps, the compositions and methods may also "consist essentially of" or "consist of" the various components and steps. The term "comprise(s)" or "include(s)" when used in this specification, specifies the presence of stated elements, but does not preclude the presence or addition of one or more other elements, unless the context clearly indicates otherwise.

The terms "about" and "substantially" are used herein in the sense of at, or nearly at, when given the manufacturing and material tolerances inherent in the stated circumstances and are used to prevent the unscrupulous infringer from unfairly taking advantage of the present disclosure where exact or absolute figures are stated as an aid to understanding the present disclosure. The terms "about" and "approximate", when used along with a numerical variable, generally means the value of the variable and all the values of the variable within an experimental error (*e.g.,* 95% confidence interval for the mean) or within a specified value ± 10% or within a broader range. Unless otherwise indicated, all numbers expressing quantities of ingredients, properties such as molecular weight, reaction conditions, and so forth used in the present specification and associated claims are to be understood may be modified by the term "about."

"A and/or B" when used in this specification, specifies "either A or B or both."

As used herein, the term "average particle size" means average obtained particle size as observed using scanning electron microscopy (SEM).

As used herein, the term "mean particle size" means mean particle size as observed using SEM.

### <Composite Positive Electorde>

In one aspect, the composite positive electrode is made from a mixture that comprises a plurality of sulfur particles, a plurality of sulfur-containing solid electrolyte particles, and a plurality of acetylene black carbon particles, which are ball milled to form a milled mixture, and then pressured to form the composite positive electrode.

Other aspects relate to a method for making a composite positive electrode.

Other aspects relate to an all-solid-state battery comprising a negative electrode; a composite positive electrode as described above; and a solid electrolyte. In particular, the all-solid-state battery may be a lithium metal all-solid-state battery (Li-ASSB), which has the advantage of avoiding organic materials (that can react or pose a risk of combustion).

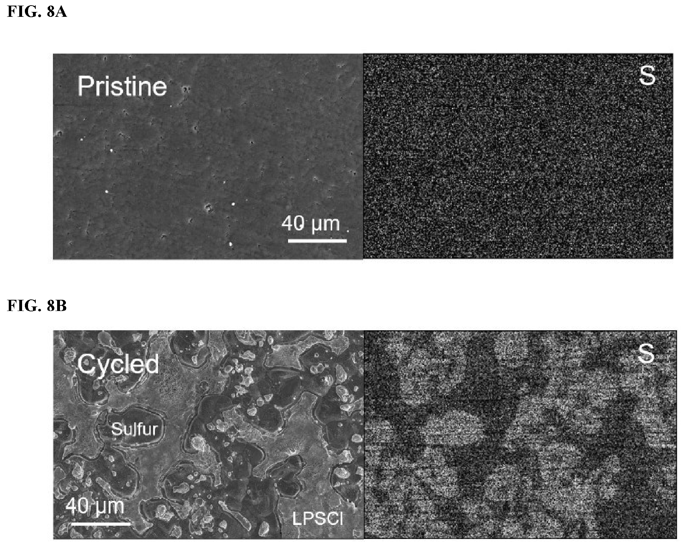

In some aspects, the composite positive electrode comprises sulfur channels in contact with the solid electrolyte. These sulfur channels may be distributed stochastically within the positive electrode composite with a channel diameter ranging from 10 - 40 microns shown in **Figure 8B****.**

As discussed below, the positive electrode may be made by providing a plurality of sulfur particles, wherein the sulfur particles have an average particle size from 5 µm to 10 µm; providing a plurality of sulfur-containing solid electrolyte particles of formula Li₆PS₅X, wherein X = Cl, Br, or I; and providing a plurality of acetylene black carbon particles. Preferably, the plurality of acetylene black carbon particles have a mean particle size from 10 nm to 100 nm, BET specific surface area from 50 m²g⁻¹ to 150 m²g⁻¹, and a para-crystalline structure. The sulfur particles, sulfur-containing solid electrolyte particles, and conductive material are milled to form a milled mixture. The milled mixture is pressurized to form a composite positive electrode.

The sulfur particles used for making the composite positive electrode may have an average particle size from 5 µm to 10 µm. The sulfur particles may have an average particle size from a lower value of 5 µm, 5.5 µm, 6 µm, 6.5 µm, 7 µm, 7.5 µm, 8 µm, 8.5 µm, 9 µm or 9.5 µm. The sulfur particles may have an average particle size with an upper value of 9.5 µm, 9 µm, 8.5 µm, 8 µm, 7.5 µm, 7 µm, 6.5 µm, 6 µm or 5.5 µm.

The sulfur particles may be used as received in a commercial form.

The sulfur particles may be separately milled prior to combining with the sulfur-containing solid electrolyte particles and the acetylene black carbon particles.

In another aspect, lithium sulfide particles may be used instead of sulfur particles. In some aspects, the sulfur particles may be combined with lithium sulfide (Li₂S). If lithium sulfide is used, it may be processed in the same manner as described herein for the sulfur particles. Any commercial grade of lithium sulfide may be used as received, preferably in the form of powder, and in in anhydrous form. When lithium sulfide particles are used, they are preferably within the micron scale, *e.g.,* 5 µm to 30 µm. The lithium sulfide particles are ball-milled using the same conditions described herein with respect to the sulfur particles. Preferably, when milling the lithium sulfide particles, composite particles are preserved after ball-milling (*e.g.*, ball-milling for 1 hour at 500 rpm). For instance, the lithium sulfide particles, sulfide-based solid electrolyte (LPSCl), and a conductive material are ball-milled, then pressurized to form the positive electrode, in the same manner discussed below for the sulfur particles. The same amounts and concentrations may be used for the lithium sulfide particles, as described herein with respect to the sulfur particles. For instance, in one aspect, the ratio of Li₂S particles: LPSCl: acetylene black (AB) carbon may be 30:50:20 wt.%.

The sulfur-containing solid electrolyte particles are preferably of formula Li₆PS₅X, wherein X = Cl, Br, or I. In an aspect, the plurality of sulfur-containing solid electrolyte particles are of formula Li₆PS₅Cl.

In certain aspects, the sulfur-containing solid electrolyte particles have an average size from 5-10 µm. The sulfur particles may have an average particle size from lower value of 5 µm, 5.5 µm, 6 µm, 6.5 µm, 7 µm, 7.5 µm, 8 µm, 8.5 µm, 9 µm or 9.5 µm. The sulfur particles may have an average particle size with an upper value of 9.5 µm, 9 µm, 8.5 µm, 8 µm, 7.5 µm, 7 µm, 6.5 µm, 6 µm or 5.5 µm.

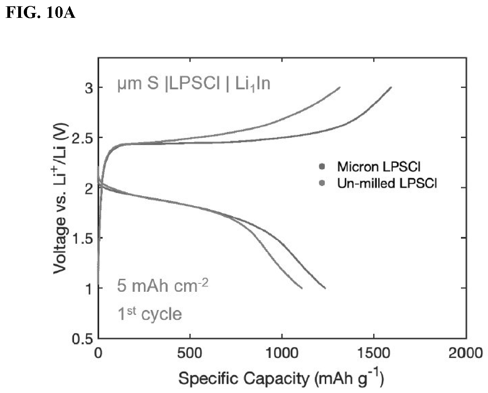

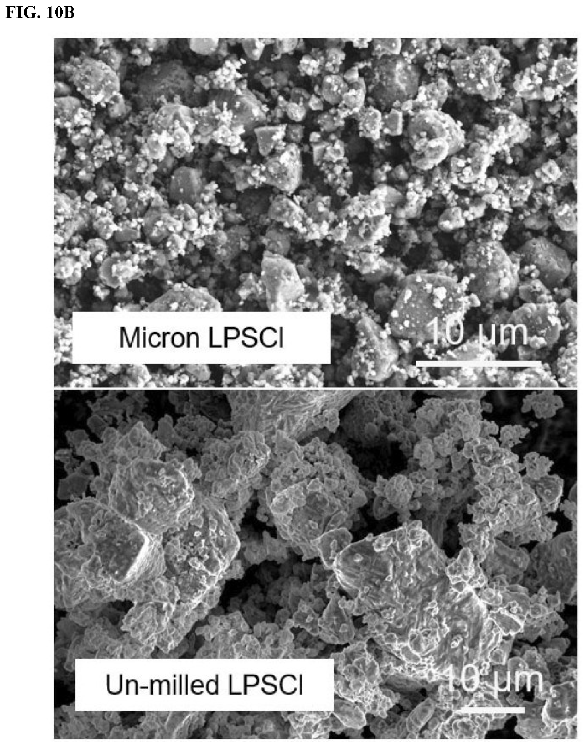

**FIG. 10A** shows electrochemical performance at 5mAh cm⁻² areal capacity demonstrating size effect of LPSCl solid electrolyte for a first cycle voltage profile comparing micron and un-milled LPSCl. **FIG. 10B** shows SEM images of micron and un-milled LPSCl solid electrolyte.

The acetylene black carbon particles, preferably have a mean particle size from 10 nm to 100 nm. In an aspect, the plurality of acetylene black carbon particles have a mean particle size of from 20 nm to 80 nm. In an aspect, the plurality of acetylene black carbon particles have a mean particle size of from 30 nm to 70 nm, or a mean particle size of 40 nm.

The acetylene black carbon particles, preferably have a BET specific surface area from 50 m²g⁻¹ to 150 m²g⁻¹, from 75 m²g⁻¹ to 125 m²g⁻¹, from 80 m²g⁻¹ to 100 m²g⁻¹ or 90 m²g⁻¹.

The acetylene black carbon particles may preferably have a crystalline structure. A crystalline structure may include a continuous crystalline structure, for example monocrystalline acetylene black carbon. Alternatively, the acetylene black carbon may include one or more crystal grains in a continuous crystalline structure, for example polycrystalline (or multi-crystalline) silicon.

In certain aspects, the plurality of acetylene black carbon have a para-crystalline structure, where they are neither fully amorphous nor fully crystalline. In a para-crystalline material, the acetylene black carbon exhibits short-range and/or medium-range order in its crystalline structure but lacks long-range order in at least one direction.

In certain aspects, the acetylene black carbon particles are non-porous.

In certain aspects, the positive electrode may further include additional positive electrode active materials, or optionally, an additional electrically conducting conductive material for facilitating the movement of electrons in the positive electrode, and/or a binder for attaching to the positive electrode active material to a current collector.

For instance, the additional positive electrode conductive material may be, for example, at least one conductive material selected from the group consisting of graphite, carbon black, carbon fibers, carbon nanotubes, or metal fibers, metal powder, conductive whiskers, conductive metal oxide, activated carbon or polyphenylene derivatives.

The additional conductive material is not particularly limited, but a conducting material, such as a graphite-based material such as KS6 and a carbon-containing material such as Super-p, Denka black and carbon black, or a conducting polymer, such as polyaniline, polythiophene, polyacetylene, and polypyrrole, may be used either alone or in mixture. For instance, the additional positive electrode conductive material may be at least one conductive material selected from the group consisting of natural graphite, artificial graphite, super-p, acetylene black, ketjen black, channel black, furnace black, lamp black, thermal black, denka black, aluminum powder, nickel powder, zinc oxide, potassium titanate and titanium oxide.

Optionally, a binder may be used in the positive electrode. For the content of the binder, the binder may be added in an amount of 0.5 to 30 wt %, based on the total weight of the mixture including the positive electrode active material. When the content of the binder is less than 0.5 wt %, physical properties of the positive electrode deteriorate, and thus, there is a problem in that an active material and a conductive material in the positive electrode are eliminated, and when the content is more than 30 wt %, the ratio of the active material and the conductive material in the positive electrode is relatively decreased, and thus, the battery capacity may be decreased, which is not preferred.

As the binder, it is possible to use poly(vinyl acetate), polyvinyl alcohol, polyethylene oxide, polyvinyl pyrrolidone, alkylated polyethylene oxide, cross-linked polyethylene oxide, polyvinyl ether, poly(methyl methacrylate), polyvinylidene fluoride, a copolymer (trade name: Kynar) of polyhexafluoropropylene and polyvinylidene fluoride, poly(ethyl acrylate), polytetrafluoroethylene, polyvinyl chloride, polyacrylonitrile, polyvinylpyridine, polystyrene, derivatives, blends, and copolymers thereof, and the like.

For instance, the positive electrode binder resin may include polymer for the positive electrode commonly used in the technical field. Non-limiting examples of the binder resin may include, but are not limited to, polyvinylidene difluoride, polyvinylidene fluoride-co-hexafluoropropylene, polyvinylidene fluoride-co-trichloroethylene, polymethylmethacrylate, polyethylhexyl acrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan and carboxyl methyl cellulose.

Meanwhile, in some aspects of the present disclosure, the positive electrode may have a loading amount (per positive electrode area) of 5 mAh/cm² or more, 6 mAh/cm² or more, or 10 mAh/cm² or more. In the battery according to the present disclosure, when the high loading positive electrode is applied, it is possible to operate the battery on the electrochemically stable level.

In certain aspects, the sulfur particles, sulfur-containing solid electrolyte particles, and conductive material are ball milled to form a milled mixture.

The present disclosure uses single step preparation via ball-milling, which is a simple and convenient method that avoids convention multistep methods or complicated processes such as vapor deposition of sulfur on solid electrolyte/carbon composite. It should be noted that vapor deposition techniques cannot make 3D structures, limiting transport pathways to the surface of the solid electrolyte. It is noted that after cycling, sulfur channels are observed which maintain good contact with the solid electrolyte, reinforcing the excellent performance, as shown in FIG. 8A and FIG. 8B. FIG. 8A shows the SEM images and EDS mapping of the µm Sulfur composite positive electrode surface in a pristine state. FIG. 8B shows the SEM images and EDS mapping of the µm Sulfur composite positive electrode surface in a cycled state.

The composite positive electrode may be prepared by mechanical mixing of the sulfur particles, sulfur-containing solid electrolyte particles, and conductive material. The milling may be carried out using a suitable apparatus. For instance, a Emax high power mill may be used. In some aspects, 5 mm balls may be used for the milling. In some aspects, the composite positive electrode mixture may be formed by hand mixing, or using a planetary ball milling apparatus. For instance, the planetary ball mills may be used for grinding sample material down to very small sizes. A planetary ball mill consists of at least one grinding jar which is arranged eccentrically on a so-called sun wheel.

The mixing may be carried out by a dry mixing method. First, the positive electrode materials comprising the positive electrode active material, the conductive material and the binder resin are put into a mixing device and mixed by a mechanical method to obtain a mixture. The mixing device includes any type of device that can form a comparatively homogeneous mixture phase such as a well-known mixer agitator, and is not limited to a particular type of device. Meanwhile, in some aspects of the present disclosure, to improve the dispersion of solids and induce the fibrous form of the binder resin in the mixing process, a temperature rising process may be included. In the temperature rising process, the temperature may be appropriately controlled in the range of 30°C to 100°C.

Subsequently, the positive electrode active material layer may be formed by extruding the mixture into the shape of a positive electrode (a wide film shape) using an extruder, and adjusting the thickness through a pressing process. The positive electrode active material layer may be applied to the positive electrode with no current collector, or if necessary, the current collector may be attached to the obtained positive electrode active material layer to prepare the positive electrode including the current collector.

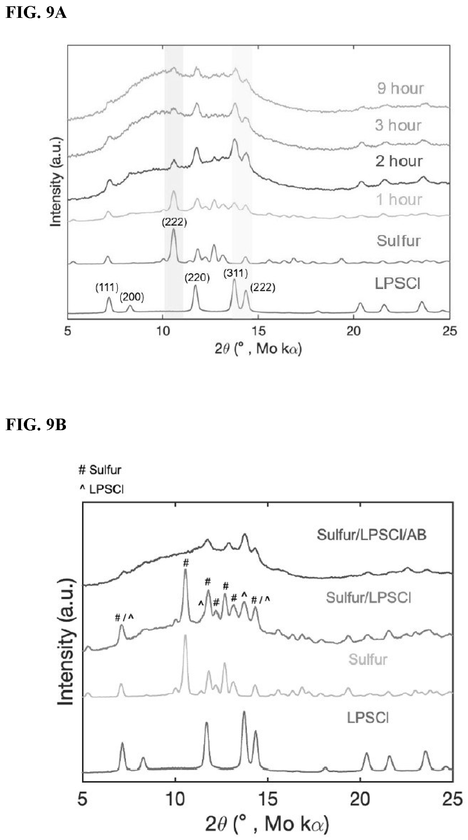

It is noted that ball-milling just a S/LPSCl composite generates amorphous features for sulfur like peak broadening and reduction of sulfur's (222) main diffraction peak. The addition of acetylene black carbon increases amorphous features within the composite. FIG. 9A is an XRD diffractogram showing amorphization of composite for milled S/LPSCl composite with various milling times. With increase milling times, amorphization of the sulfur in the S/LPSCl composite is apparent. FIG. 9B is an XRD diffractogram showing amorphization of composite for milled S/LPSClIC composite with various milling times. The amorphous features of sulfur may be responsible for the improved kinetics of the positive electrode composite by facilitating faster lithium transport.

Since sulfide-containing materials are sensitive to air and moisture, and might decompose to produce toxic gas such as H₂S, all the synthesis and test steps are, according to some aspects of the disclosure, performed in a glovebox or suitable apparatus (e.g., MBraun MB 200B, H₂O <0.5 ppm, O₂ < 5.0 ppm) filled with argon.

In certain aspects, prior to milling, the sulfur particles, sulfur-containing solid electrolyte particles, and conductive material are in a weight ratio of 20-50 : 40-60 : 10-30. In an aspect, the sulfur particles, sulfur-containing solid electrolyte particles, and conductive material are in a weight ratio of 30 : 50 : 20, preferably a weight ratio of 25 : 50 : 25 or a weight ratio of 20 : 50 : 30.

The milling is preferably carried out at 200-500 rpm, 300-500 rpm, 400-500 rpm, or 400 rpm.

In an aspect, the milling may be for any suitable time to achieve the desired particle size. For instance, the milling may be performed for 30 minutes. In some aspects, the reaction time may be from 1 hour to 8 hours, and according to some aspects, from 2 hours to 7 hours or from 3 hours to 5 hours. The milling is preferably carried out for 1 hour.

The milled mixture is then pressured to form the composite positive electrode. In certain aspects, the pressurizing is carried out at a pressure from 100 MPa to 500 MPa, for instance from 150 MPa to 375 MPa.

The pressurizing may be carried out for 1 minute to 60 minutes, e.g., for 10 minutes, for 15 minutes, for 30 minutes, for 45 minutes, or for 50 minutes.

In some aspects, the sulfur has amorphous features after the ball milling.

In certain aspects, the composite positive electrode is comprised of sulfur channels after electrochemically cycling, where channel diameter may range from 10 - 40 microns, distributed stochastically within the composite. The channel diameter may be 15 microns, 20 microns, 25 microns, or 30 microns.

The composite positive electrode mixture may then be used to make a positive electrode (also referred to as a cathode).

A positive electrode current collector may be used, and is not particularly restricted, as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, titanium, or plastic carbon. Alternatively, the positive electrode current collector may be made of aluminum or stainless steel, the surface of which is treated with carbon, nickel, titanium, or silver.

The current collector is not limited to a particular type and may include those having high conductivity without causing a chemical change in the corresponding battery, for example, stainless steel, copper, aluminum, nickel, titanium, sintered carbon, or aluminum or stainless steel treated with carbon, nickel, titanium and silver on the surface.

A positive electrode active material includes an excellent positive electrode active material particle for sulfide-based all-solid-state batteries, the surface of which is reformed, according to the present disclosure. In addition, an additional material may be used depending on what a lithium secondary battery is used for. For example, a transition-metal-compound-based active material or a sulfide-based active material may be used.

### <All-Solid-State Battery>

An aspect of the present disclosure relates to a solid-state battery comprising a solid electrolyte material as an electrolyte. Specific examples of the solid-state battery include any type of primary battery, secondary battery, fuel cell, solar cell or capacitor such as a super capacitor. In particular, the battery is a lithium-ion secondary battery. Aspects of the disclosure here may be implemented in a secondary battery with various form factors or battery formats, including for example in a pouch-type battery, a cylindrical battery, or a prismatic battery.

In an aspect of the disclosure, the solid-state battery according to the present disclosure comprises an anode (a negative electrode), a cathode (a positive electrode) and a solid electrolyte interposed between the negative electrode and the positive electrode.

The electrode of the all-solid-state battery may have a structure in which an electrode active material is formed on an electrode current collector. The electrode current collector may be omitted depending on the structure of the electrode. In the case in which the electrode is a negative electrode, the electrode current collector is a negative electrode current collector.

In certain aspects, the all-solid-state battery is manufactured through a dry compression process, in which electrode powder and solid electrolyte powder are manufactured, or with a polymetric binder, introduced into a predetermined mold, and pressed, or a slurry coating process, in which a slurry composition including an active material, a solvent, and a binder is manufactured, coated on a current collector, and dried. In the present disclosure, the method of manufacturing the all-solid-state battery having the above structure is not particularly restricted. Any well-known method may be used.

For example, the solid electrolyte may be disposed between the positive electrode and the negative electrode, and then the same is compressed in order to assemble a cell. The assembled cell is mounted in a sheathing member, and then the sheathing member is encapsulated by heating and compression. A laminate case made of aluminum or stainless steel, a cylindrical metal container, or a prismatic metal container may be appropriately used as the sheathing member.

The electrode slurry may be coated on the current collector using a method of placing the electrode slurry on the current collector and uniformly dispersing the electrode slurry with a doctor blade, a die casting method, a comma coating method, or a screen printing method. Alternatively, the electrode slurry and the current collector may be formed on a separate substrate, and the electrode slurry and the current collector may be joined to each other through pressing or lamination. At this time, the concentration of a slurry solution or the number of coatings may be adjusted in order to adjust the final coating thickness.

The drying process is a process of removing the solvent or moisture from the slurry in order to dry the slurry coated on the metal current collector. The drying process may vary depending on the solvent that is used. For example, the drying process may be performed in a vacuum oven having a temperature of 50° C. to 200° C. For example, drying may be performed using a warm-air drying method, a hot-air drying method, a low-humidity-air drying method, a vacuum drying method, a (far-) infrared drying method, or an electron beam radiation method. The drying time is not particularly restricted. In general, drying is performed within a range of 30 seconds to 24 hours.

After the drying process, a cooling process may be further performed. In the cooling process, slow cooling to room temperature may be performed such that the recrystallized structure of the binder is sufficiently formed.

In addition, if necessary, a rolling process, in which the electrode is passed through a gap between two heated rolls such that the electrode is compressed so as to have a desired thickness, may be performed in order to increase the capacity density of the electrode and to improve adhesion between the current collector and the active material after the drying process. In the present disclosure, the rolling process is not particularly restricted. A well-known rolling process, such as pressing, may be performed. For example, the electrode may pass through a gap between rotating rolls, or a flat press machine may be used to press the electrode.

For purposes of the solid electrolyte interposed between the negative electrode and the positive electrode in the all-solid-state battery, any suitable sulfide-containing electrolyte material may be used. As used here, "sulfide-based electrolyte" refers to an electrolyte that includes inorganic materials containing S which conduct ions (*e.g.,* Li⁺), and which are suitable for electrically insulating the positive and negative electrodes of an electrochemical cell. Exemplary sulfide-containing electrolytes are set forth in Shaojie Chen et al., "Sulfide solid electrolytes for all-solid-state lithium batteries: Structure, conductivity, stability and application," Energy Storage Materials, Volume 14, Pages 58-74 (September 2018), which is hereby expressly incorporated by reference in its entirety.

For example, many sulfide-containing electrolyte materials are particularly attractive due to their superionic conductivities (as high as ~10⁻² S cm⁻¹) and deformability. In particular, Li₃P₇S₁₁, Li₁₀GeP₂S₁₂, and Na₃PS₄ and Li₆PS₅Cl have been reported to exhibit high ionic conductivities; some even close to those of liquid electrolytes. According to aspects of the disclosure, the sulfide solid electrolyte materials also provide a low Young's modulus, which is beneficial for producing favorable interface contacts with electrode materials by simple cold pressing at room temperature.

The sulfide-containing solid electrolyte, according to aspects of the disclosure, may contain sulfur (S) and have the ionic conductivity of metal belonging to Group I or II in the periodic table, *e.g.,* Li⁺. Additionally, in an aspect of the present disclosure, the selected solid electrolyte has the ionic conductivity of 1x10⁻⁵ S/cm, or according to some aspects of the disclosure, 1x10⁻³ S/cm or more.

Non-limiting examples of the sulfide-containing solid electrolyte may include Li-P-S-based glass, Li-P-S-based glass ceramic and argyrodite-based sulfide-containing solid electrolyte.

Non-limiting examples of the sulfide-containing solid electrolyte may include at least one of xLi₂S-yP₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅ -Al₂S₃, Li₂S-GeS₂ or Li₂S-GeS₂-ZnS, Li6PS5X (X = at least one of Cl, Br or I).

In an aspect of the present disclosure, the sulfide-containing solid electrolyte may comprise at least one selected from LPS-based glass or glass ceramic such as xLi₂S-yP₂S₅, or an argyrodite-based sulfide-containing solid electrolyte (Li₆PS₅X; X = Cl, Br, I).

In another aspect, the solid electrolyte may include a solid electrolyte commonly used in the all-solid-state battery, such as an inorganic solid electrolyte or an organic solid electrolyte may be used.

In the case of the inorganic solid electrolyte, a ceramic material, a crystalline material or an amorphous material may be used. For instance, inorganic solid electrolytes such as thio-LISICON (Li_{3.25}Ge_{0.25}P_{0.75}S₄), Li₂S-SiS₂, LiI-Li₂S-SiS₂, LiI-Li₂S-P₂S₅, LiI-Li₂S-P₂O₅, LiI-Li₃PO₄-P₂S₅, Li₂S-P₂S₅, Li₃PS₄, Li₇P₃S₁₁, Li₂O-B₂O₃, Li₂O-B₂O₃-P₂O₅, Li₂O-V₂O₅-SiO₂, Li₂O-B₂O₃, Li₃PO₄, Li₂O-Li₂WO₄-B₂O₃, LiPON, LiBON, Li₂O-SiO₂, LiI, Li₃N, Li₅La₃Ta₂O₁₂, Li₇La₃Zr₂O₁₂, Li₆BaLa₂Ta₂O₁₂, Li₃PO_{(4-3/2w)}Nw (wherein w is w<1), and Li_{3.6}Si_{0.6}P_{0.4}O₄ may be used.

The average size of sulfide-based particles is, for example, 0.1 µm to 50 µm, preferably 0.5 µm to 20 µm, which is within the size range of sulfide-based particles used in well-known all-solid-state batteries. In the case in which the average size of the sulfide-based particles is less than the above range, the sulfide-based particles may form lumps. In the case in which the average size of the sulfide-based particles is greater than the above range, on the other hand, the porosity of the manufactured solid electrolyte is high, whereby the characteristics of the battery may be deteriorated. For example, the capacity of the battery may be reduced.

Preferably, the sulfide-based particle has an ion conductivity of 1×10⁻⁴ S/cm or more. More preferably, the sulfide-based particle has an ion conductivity of 1×10⁻³ S/cm or more.

In addition to the above-mentioned sulfide-based solid electrolytes, other well-known solid electrolytes may also be used. For example, an inorganic solid electrolyte, such as Li₂O-B₂O₃, Li₂O-B₂O₃-P₂O₅, Li₂O-V₂O₅-SiO₂, Li₃PO₄, Li₂O-Li₂WO₄-B₂O₃, LiPON, LiBON, Li₂O-SiO₂, LiI, Li₃N, Li₅La₃Ta₂O₁₂, Li₇La₃Zr₂O₁₂, Li₆BaLa₂Ta₂O₁₂, Li₃PO_{(4-3/2w)}N_{w} (w<1), or Li_{3.6}Si_{0.6}P_{0.4}O₄, may be used.

In addition, examples of the organic solid electrolyte include organic solid electrolytes prepared by mixing lithium salt to polymeric materials such as polyethylene derivatives, polyethylene oxide derivatives, polypropylene oxide derivatives, phosphate ester polymers, agitation lysine, polyester sulfide, polyvinyl alcohol, and polyvinylidene fluoride. In this case, these may be used alone or in combination of at least two.

The above-described coated sulfide-containing electrolyte material may be used for a solid electrolyte for an all-solid-state battery. The all-solid-state battery contains a positive electrode, a negative electrode, with the solid electrolyte interposed therebetween.

Meanwhile, the positive electrode and the negative electrode for the all-solid-state battery according to aspects of the present disclosure are not particularly limited and any suitable one known in the art may be used.

The all-solid-state battery proposed according to aspects of the present disclosure defines the constitution of the solid electrolyte as described above, and the other elements constituting the battery, that is, the positive electrode and the negative electrode, are not particularly limited in the present disclosure and follow the description below.

In an aspect, the negative electrode for the all-solid-state battery is a lithium metal alone, or negative electrode active material may be laminated on the negative electrode current collector.

The negative electrode current collector is not particularly limited as long as it is conductive without causing any chemical change in the all-solid-state battery, and for example, copper, stainless steel, aluminum, nickel, titanium, sintered carbon, copper or stainless steel whose surface is treated with carbon, nickel, titanium, silver or the like, or aluminum-cadmium alloy, etc. may be used. Additionally, as with the positive electrode current collector, the negative electrode current collector may include various forms such as a film, a sheet, a foil, a net, a porous body, a foam, and a nonwoven fabric having minute irregularities formed on their surfaces.

The negative electrode active material may be one or more of a lithium metal, a lithium alloy, a lithium metal composite oxide, a lithium-containing titanium composite oxide (LTO), and a combination thereof. In this case, the lithium alloy may be an alloy of lithium and at least one metal selected from Na, K, Rb, Cs, Fr, Be, Mg, Ca, Sr, Ba, Ra, Al and Sn. Also, the lithium metal composite oxide may be lithium and an oxide (MeOₓ) of any one metal (Me) selected from the group consisting of Si, Sn, Zn, Mg, Cd, Ce, Ni and Fe and for example, may be LixFe₂O₃ (0 ≤ x ≤ 1) or LixWO₂ (0 ≤ x ≤ 1).

In addition, the negative electrode active material may comprise metal composite oxides such as SnₓMe₁₋ₓMe'_{y}O_{z} (Me: Mn, Fe, Pb, Ge; Me': Al, B, P, Si, elements of groups 1, 2 and 3 of the periodic table, halogen; 0<x=1; 1=y=3; 1=z=8); oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅, and carbon-containing negative electrode active materials such as crystalline carbon, amorphous carbon or carbon composite may be used alone or in combination of two or more.

Additionally, the electrode may contain a conductive agent, a solid electrolyte, or a dispersant may be further included, in addition to the active material. Nickel powder, a cobalt oxide, a titanium oxide, or carbon may be used as the conductive agent. At least one selected from the group consisting of Ketjen black, acetylene black, furnace black, graphite, carbon fiber, and fullerene may be used as the carbon.

### EXAMPLES

The following examples are not intended to be limiting. The above disclosure provides many different aspects for implementing the features of the disclosure, and the following examples describe certain aspects. It will be appreciated that other modifications and methods known to one of ordinary skill in the art may also be applied to the following experimental procedures, without departing from the scope of the disclosure.

### Synthetic Example 1-Composite Positive Electorde

Milled sulfur was prepared by milling sulfur (1g batches, Sigma Aldrich) at 400 rpm with 5mm balls for 10 hours using an Emax high power mill.

Li₁In₁ was synthesized by combining 60 mg of Li SLMP (Livent) and 990 mg of Indium metal powder (Fisher Scientific) (-100 mesh). The mixture was vortex mixed for 5 minutes.

The positive electrode material was synthesized by combining the above milled sulfur, LPSCl, and acetylene black (AB) carbon (Sigma Aldrich) in a weight ratio of 30:50:20 to form a milled positive electrode. A 1 gram batch was milled with 5mm balls at 500 rpm for 1 hour.

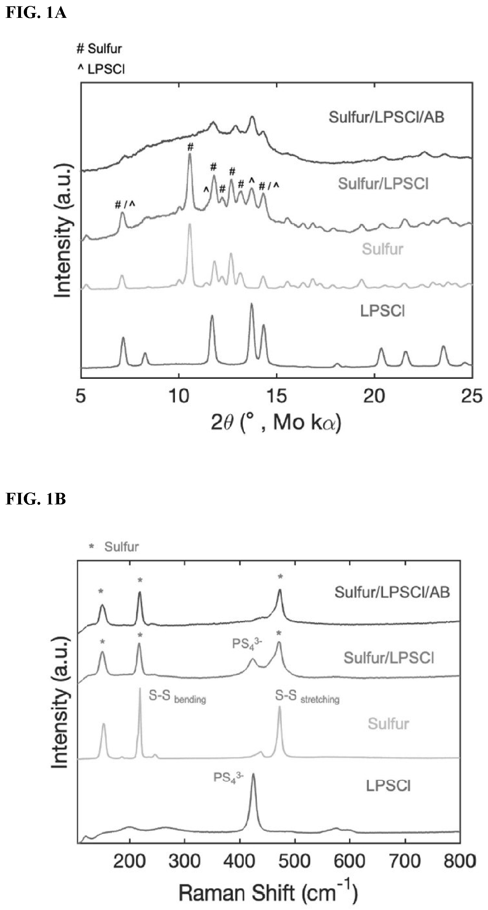

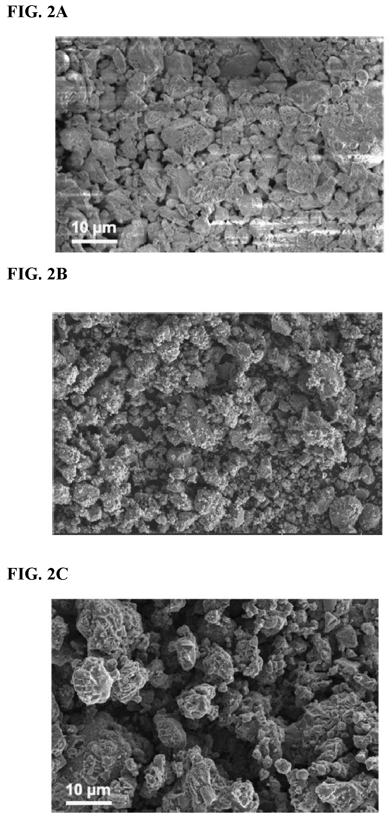

The positive electrode material was chemically stable, with no new bulk phase present. In the PXRD diffractogram and Raman spectra in FIG. 1A and FIG. 1B, respectively, it can be seen that the peaks present in LPSCl and sulfur individually (lower curves) are present in the mixture of LPSCl and sulfur together. The top curves in FIG. 1A and FIG. 1B show the mixture of LPSCl and sulfur with acetylene black (AB). In FIG. 2A, an SEM image of the ball milled sulfur is shown; in FIG. 2B, an SEM image of the milled LPSCl is shown, and in FIG. 2C, an SEM image of the positive electrode mixture of LPSCl, sulfur with acetylene black (AB) is shown.

The milled positive electrode material was pressurized at 375 MPa for 5 minutes to form a composite positive electrode.

### Experimental Example 1

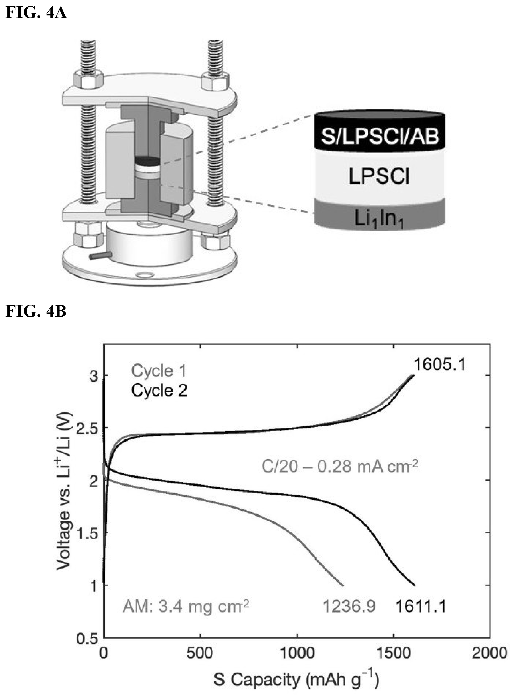

The milled positive electrode material from Synthetic Example 1 was tested for areal capacity performance using a fixed gap holder at 5 mAh cm⁻², Li₁In₁ usable capacity of 110 mAh g⁻¹ and NP ratio of 2, as shown on FIG. 4A.

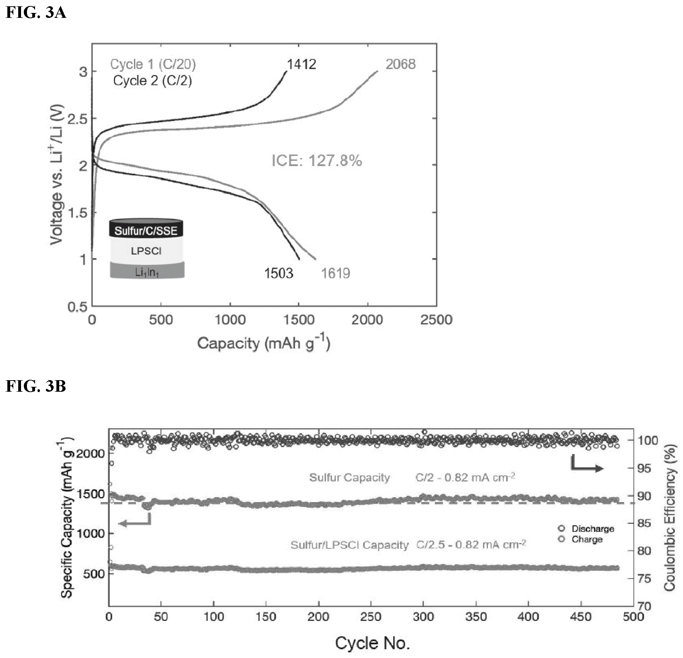

FIG. 3A shows the test results for Capacity (mAh g⁻¹) as a function of Voltage vs. Li⁺/Li (V) with a designed areal capacity of 1.6 mAh cm⁻² where the first cycle is tested at a current density of 0.07 mA cm⁻² and the second cycle tested at higher current density of 0.8 mA cm⁻². FIG. 3B shows the results for Specific Capacity (mAh g⁻¹) as a function of cycle number when operated at 0.8 mA cm⁻². FIGs. 3A and 3B demonstrate the high-rate cycling performance obtained using the milled positive electrode material. There was excellent retention and stable cycling at high rates, with 95.5% capacity retention achieved after 485 cycles.

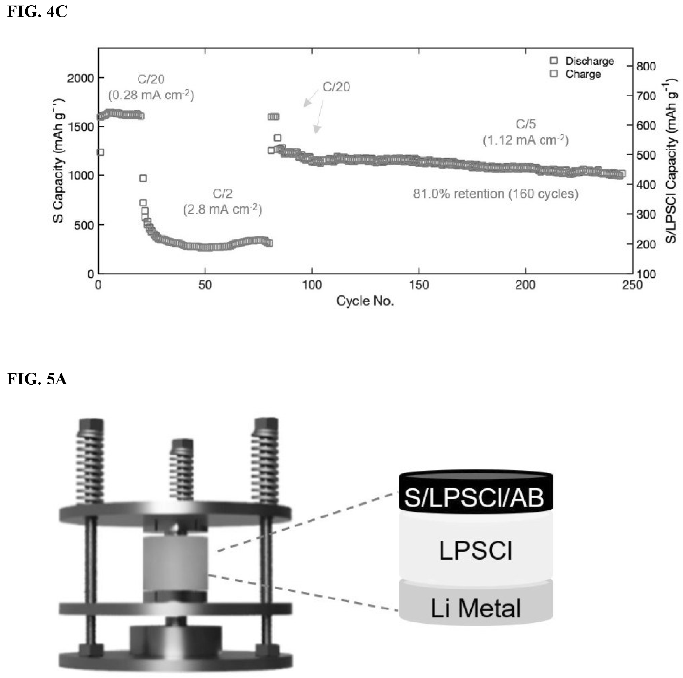

FIG. 4A shows the apparatus used for testing, which is a fixed gap holder at 5 mAh cm⁻², Li₁In₁ usable capacity of 110 mAh g-1 and NP ratio of 2. FIG. 4B shows the results for S Capacity (mAh g⁻¹) as a function of Voltage vs. Li⁺/Li (V). FIG. 4C shows the results for S Capacity (mAh g⁻¹) as a function of cycle number. As can be seen, C/2 performance was unstable at 2.8 mA cm⁻² beyond Li₁In₁ CCD, and C/5 performance is stable at 1.12 mA cm⁻². For high areal loading, the limiting factor appears to be the positive electrode.

### Experimental Example 2

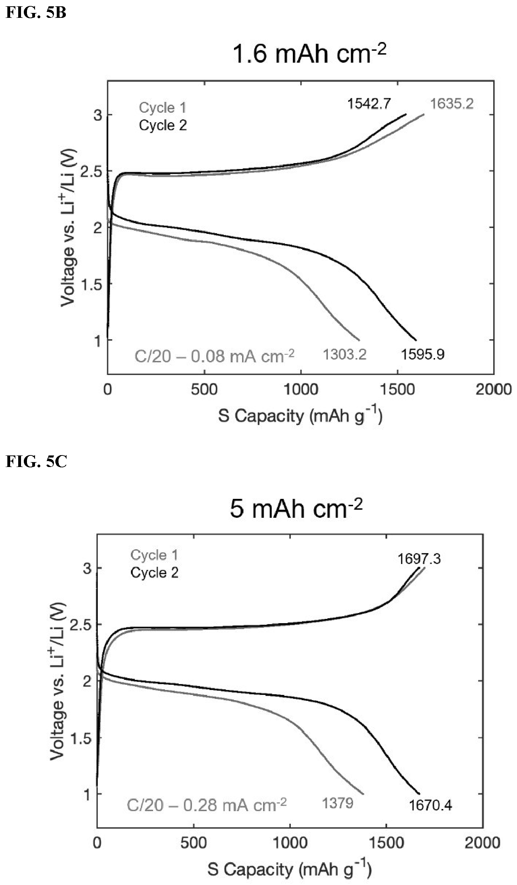

The setup was as shown in FIG. 5A (according to S.-Y. Ham et al., Energy Storage Materials 55:455-462 (2023)) at a constant pressure of 10 MPa, evaluating performance with a positive electrode areal capacity of 1.6 - 5 mAh cm⁻². LPSCl was used as the electrolyte, the milled positive electrode mixture of sulfur, LPSCl, and acetylene black (AB) carbon in a weight ratio of 30:50:20 from Synthetic Example 1 was used as the positive electrode material, and Li metal was used as the negative electrode. When tested at 1.6 mAh cm⁻² and 5 mAh cm⁻², respectively, the results for S Capacity (mAh g⁻¹) as a function of Voltage vs. Li⁺/Li (V) are shown in FIG. 5B and FIG. 5C.

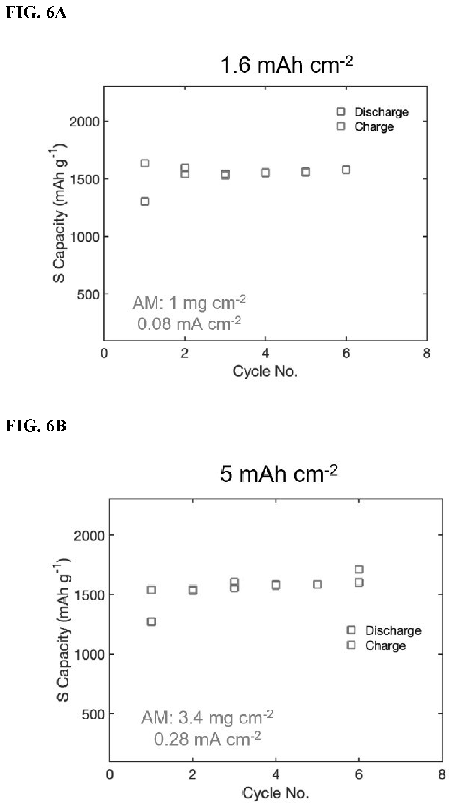

Using the same setup as shown in FIG. 5A, the results for S Capacity (mAh g⁻¹) as a function of cycle number are shown in FIG. 6A and FIG. 6B, respectively. FIG. 6A shows the results for S Capacity (mAh g⁻¹) as a function of cycle number when evaluated at 1.6 mAh cm⁻². FIG. 6B shows the results for S Capacity (mAh g⁻¹) as a function of cycle number when evaluated at 5 mAh cm⁻².

### Experimental Example 3

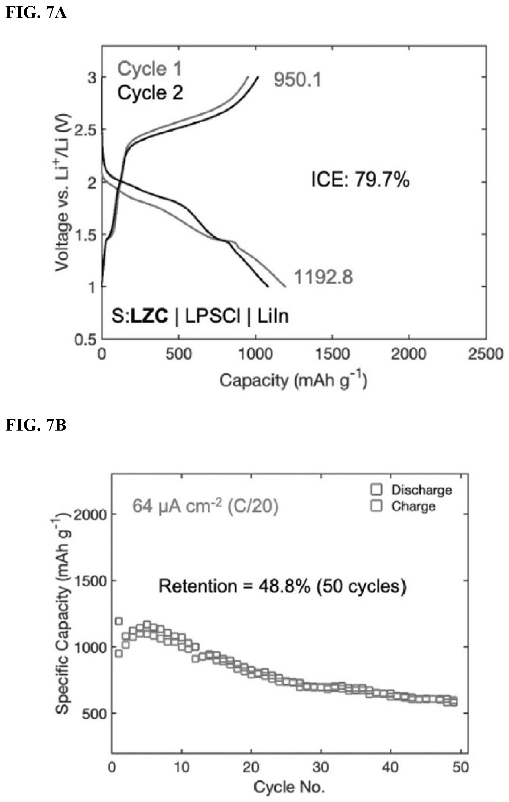

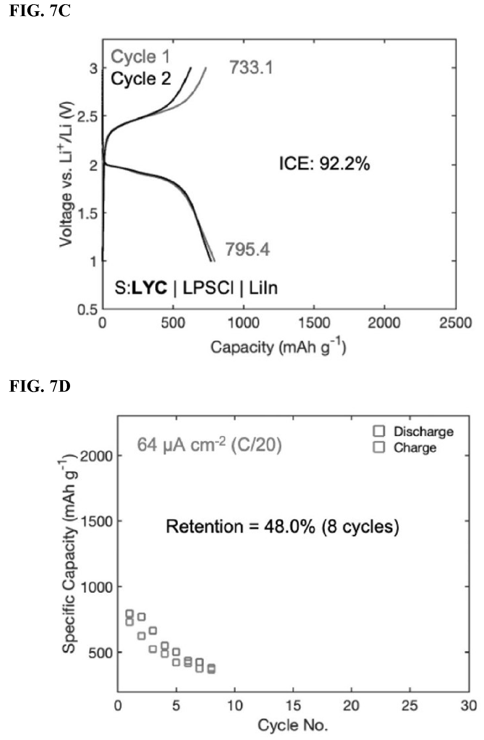

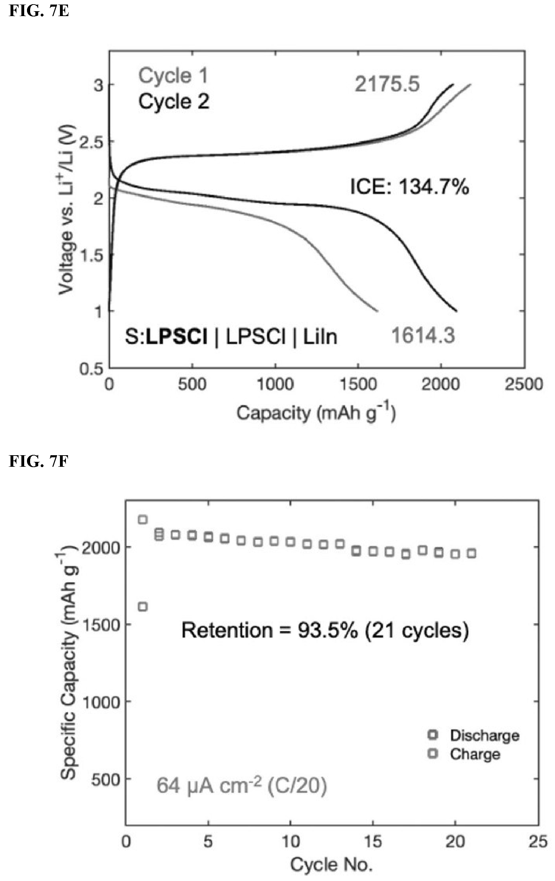

A procedure as set forth in Experimental Example 1 was conducted, but using a set up for each of two additional chloride-based solid electrolytes, *e.g.,* LZC (Li₂ZrCl₆), and LYC (Li₃YCl₆). FIGs. 7A-7F shows the testing results for elemental sulfur all-solid-state cell performance using chloride and sulfide-based electrolytes. Voltage profiles and cycling performance is shown for LZC *(see* FIG. 7A and FIG. 7B), LYC *(see* FIG. 7C and FIG. 7D), and LPSCl *(see* FIG. 7E and FIG. 7F) as the ion conductor within the positive electrode composite. LPSCl solid electrolyte remains an ideal choice due to its reversibility within the operating voltage of sulfur redox 1V - 3 V vs. Li/Li+. Chloride electrolytes achieve sufficient capacity utilization but exhibit poor stability due to their higher reduction potentials, reducing the ionic conductivity within the positive electrode composite.

### Comparative Example 1

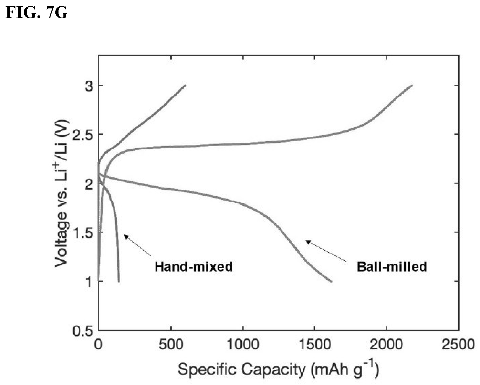

The setup was as shown in FIG. 5A at a constant pressure of 10 MPa and positive electrode areal capacity of 1.6 mAh cm⁻². LPSCl was used as the electrolyte, the positive electrode mixture of sulfur, LPSCl, and acetylene black (AB) carbon in a weight ratio of 30:50:20 was used as the positive electrode material, except that the mixture was not ball-milled as shown in FIG. 7G comparing the results of the milled positive electrode shown in FIG. 7E. Li₁In₁ was used as the negative electrode for both cases.

It will be understood by those of ordinary skill in the art that aspects of the present disclosure may be performed within a wide equivalent range of parameters without affecting the scope of the disclosure described herein. All publications, patent applications and patents disclosed herein are incorporated by reference in their entirety.

## Claims

1. A composite positive electrode comprising:
a plurality of sulfur particles, the sulfur particles having an average particle size from 5 µm to 10 µm;
a plurality of sulfur-containing solid electrolyte particles of formula Li₆PS₅X, wherein X = Cl, Br, or I; and
a conductive material comprising a plurality of acetylene black carbon particles,
wherein the plurality of acetylene black carbon particles have: a mean particle size from 10 nm to 100 nm, a BET specific surface area from 50 m²g⁻¹ to 150 m²g⁻¹, and a para-crystalline structure;
wherein the plurality of sulfur particles, the plurality of sulfur-containing solid electrolyte particles, and the conductive material have been ball milled to form a milled mixture; and
wherein the milled mixture has been pressured to form the composite positive electrode.

2. The composite positive electrode according to claim 1, wherein the plurality of sulfur particles, the plurality of sulfur-containing solid electrolyte particles, and the conductive material are in a weight ratio of 20-50 : 40-60 : 10-30.

3. The composite positive electrode according to claim 1, wherein the plurality of acetylene black carbon particles are non-porous.

4. The composite positive electrode according to claim 1, wherein the plurality of acetylene black carbon particles have a BET specific surface area from 75 m²g⁻¹
to 125 m²g⁻¹.

5. A method for making a composite positive electrode, comprising:
providing a plurality of sulfur particles, wherein the sulfur particles have an average particle size from 5 µm to 10 µm;
providing a plurality of sulfur-containing solid electrolyte particles of formula Li₆PS₅X, wherein X = Cl, Br, or I;
providing a conductive material comprising a plurality of acetylene black carbon particles, wherein the plurality of acetylene black carbon particles have a mean particle size from 10 nm to 100 nm, BET specific surface area from 50 m²g⁻¹ to 150 m²g⁻¹, and a para-crystalline structure;
milling the plurality of sulfur particles, the plurality of sulfur-containing solid electrolyte particles, and the conductive material to form a milled mixture, and
pressurizing the milled mixture to form the composite positive electrode.

6. The method according to claim 5, wherein the milling is carried out at 200-500 rpm.

7. The method according to claim 5, wherein the milling is carried out at 400-500 rpm.

8. The method according to claim 5, wherein the milling is carried out for 1 hour.

9. The method according to claim 5, wherein the pressurizing is carried out at a pressure from 100 MPa to 500 MPa.

10. The method according to claim 5, wherein the pressurizing is carried out for 1 minute to 60 minutes.

11. The method according to claim 5, wherein the plurality of sulfur particles, the plurality of sulfur-containing solid electrolyte particles, and the conductive material are in a weight ratio of 20-50 : 40-60 : 10-30.

12. The method according to claim 5, wherein the plurality of acetylene black carbon particles have a mean particle size of 40 nm.

13. The method according to claim 5, wherein the plurality of acetylene black carbon particles have a BET specific surface area of 90 m²g⁻¹.

14. The method according to claim 5, wherein the plurality of acetylene black carbon particles are non-porous.

15. The method according to claim 5, wherein the plurality of acetylene black carbon have a para-crystalline structure.

16. A composite positive electrode manufactured according to the method of claim 5.

17. An all-solid-state battery comprising:
a negative electrode;
a composite positive electrode according to claim 1; and
a solid electrolyte.

18. The all-solid-state battery of claim 17, wherein the composite positive electrode comprises sulfur channels in contact with the solid electrolyte.

19. The all-solid-state battery of claim 18, wherein the sulfur channels have a channel diameter ranging from 10 microns to 40 microns.

20. The composite positive electrode according to claim 1, wherein the composite positive electrode comprises amorphous sulfur.
